# EUROPEAN PATENT APPLICATION

(11) **EP 1 821 263 A2**
(43) Date of publication of application: **22.08.2007**
(21) Application number: 07101689.3
(22) Date of filing: 02.02.2007
(51) Int. Cl.: G07C 9/00

(54) **An access control system**

(30) Priority: 02.02.2006 IE 20060064
(71) Applicant: Actip Limited, Terenure 6W Dublin (IE)
(72) Inventor: Tymlin, David, County Wicklow (IE); Moran, James, County Dublin (IE); Kavanagh, John, County Dublin (IE)
(74) Representative: O'Connor, Michael Donal

(57) **Abstract**

This invention relates to an access control system (1) comprising an access unit (3) associated with an access point and a control unit (5) connectable to the access unit (3) by way of a communications link. The access unit (3) has means to generate an access request and a transmitter to transmit the request to the control unit (5). The control unit has means to receive a request from the access unit, means to receive a response to the access request from an operator of the control unit (5) and means to transmit an access signal to the access point. The access control system further comprises a separate computer network (9) comprising a server (7) and at least one computing device (6) operable as the control unit (5). The communications link (11) between the control unit and the access unit is routed through the separate computer network. The invention obviates the need for extensive wiring and additional expensive equipment while at the same time provides a flexible access control system.

## Description

This invention relates to an access control system comprising an access unit associated with an access point and a control unit connectable to the access unit by way of a communications link, the access unit having means responsive to an individual to generate an access request and a transmitter to transmit the access request to the control unit, the control unit comprising means to receive an access request from the access unit, means to receive a response to the access request from an operator of the control unit and means to transmit an access signal to permit or deny access to the individual at the access point.

Access control systems that incorporate door phones and like devices are well known and are widely used in both commercial and residential buildings. These access control systems typically comprise an access unit provided by way of a door phone at an access point such as a door into a building, and a control unit provided by another door phone located internal the building. The access unit door phone and the control unit door phone are connected together by way of a dedicated communication link.

Individuals wishing to gain access to the building make an access request using the access unit door phone and an operator of the control unit door phone inside the building may check the individual's identity and allow or refuse entry to that individual using the control unit door phone. Such access control systems may be purely voice based, whereby two-way audio communication is established between an operator such as a receptionist, a security guard or a homeowner and the individual attempting to gain access to the premises. More advanced access control systems use video door phones whereby the operator can also see the individual requesting access before deciding whether or not to grant access to them. Some video door phones additionally allow two-way video communication between the operator and the individual.

Although effective from a security viewpoint, these existing access control systems have a number of disadvantages. First of all, the known access control systems require specialised hardware for the control unit and dedicated wiring for the communication link between the access unit and the control unit. This hardware can be expensive, particularly in the case of systems incorporating video door phones. Additionally, the installation of dedicated wiring for the access control system increases the overall cost of the system and the installation is both cumbersome and time-consuming to perform. Often, in cases where the access control system has been retrospectively installed in a building some time after the building was constructed, the building may not lend itself to compact and facile installation of the wiring required for such access control systems and the wiring in particular of the access control systems may be unsightly and difficult to install.

The second main disadvantage of existing access control systems is that they typically comprise only one control unit. This is very inconvenient as there must be an operator at the control unit at all times to ensure that access requests are dealt with efficiently. If the operator is not located at the control unit on the occurrence of an access request being made, the operator may be unaware of the access request and the individual requesting entry may receive no response to the access request. This is highly undesirable particularly in commercial situations where the individual may be a visitor arriving for a meeting or with a delivery of goods.

In addition to the above, if the operator of the control unit is away from the control unit when an access request is made and they become aware of the access request, they must stop what they are doing and go to the control unit to deal with the access request at the control unit. This is most inconvenient. The limitation of having a single, fixed-location control unit is inconvenient to both operators of an access control system and to individuals wishing to gain access via the system. Furthermore, since the control unit comprises specialised hardware and dedicated wiring as discussed above, it is inconvenient and expensive to install more than one control unit in a system.

It is an object of the present invention to provide an access control system that overcomes at least some of the problems associated with the known systems. It is a further object of the present invention to provide an access control system that is relatively simple and inexpensive to install.

### Statements of Invention

According to the invention there is provided an access control system comprising an access unit associated with an access point and a control unit connectable to the access unit by way of a communications link, the access unit having means responsive to an individual to generate an access request and a transmitter to transmit the access request to the control unit, the control unit comprising means to receive an access request from the access unit, means to receive a response to the access request from an operator of the control unit and means to transmit an access signal to permit or deny access to the individual at the access point, characterised in that:
the access control system further comprises a separate computer network, the computer network comprising a server and at least one computing device, the computing device being operable as the control unit and the communications link between the control unit and the access unit being routed through the separate computer network.

By having such an access control system, the system can be integrated with a separate computer network, thereby allowing any computing device connected to the separate computer network to be used as the control unit. This eliminates the need for specialised hardware for the control unit and further eliminates the need for additional dedicated wiring between the access unit and control unit. According to the present invention, it is possible to use an existing separate computer network to provide the control unit thereby obviating the need to install further equipment. The existing computer network wiring may be used to provide a communications link which will significantly reduce the cost of installation of the system. Furthermore, the purchase cost of the system will also be reduced as dedicated video handsets and the like for the control unit will not have to be purchased. All that is required is a connection between the access unit and the computer network and appropriate software loaded on the computing device. This is relatively simple to install and together the advantages will significantly reduce the overall cost of implementing such a system.

In one embodiment of the invention there is provided an access control system in which the communication link is routed through the separate computer network between the control unit and the access unit via the server. In this way, the server can control where the access request is sent to.

In another embodiment of the invention there is provided an access control system in which the computing device is provided with means to receive and display a pictorial image transmitted from the access unit as part of the access request. In this way, the access control system of the invention can operate as a video door phone system, allowing the operator at the control unit to see the individual at the access unit prior to granting him access. Furthermore, this functionality is provided without the need for bulky, expensive dedicated video door phone monitors on which to display the image received from the access unit.

In a further embodiment of the invention there is provided an access control system in which the computer network comprises a plurality of computing devices, each of the computing devices being operable as the control unit.

In this way, additional control units may be provided at a fraction of the typical cost in the known systems. Existing computing devices connected to the computer network may be used once the appropriate software is loaded thereon. Furthermore, this provides greater flexibility for operators of the access control system as they may operate the system from any one of a number of computing devices connected to the computer network. Neither the control unit nor the control unit operator is necessarily fixed to a single location. If the operator moves to another workstation, the computing device at that other workstation is also operable as a control unit in the access control system, provided it is connected to the computer network. Similarly, if the operator is absent from his workstation, another employee at another computing device may use their own computing device as a control unit to operate the access control system.

In one embodiment of the invention there is provided an access control system in which there are provided a plurality of communications links between the access unit and the computing devices and the access request is sent to each of the computing devices. In this way, the access request may be sent in a broadcast-like manner to some or all of the computing devices connected to the computer network. This will help to ensure that a prompt response is provided to the individual at the access point who generated the access request, as there will be a number of possible control units and a number of possible operators that may receive the access request. There will also be a greater chance that a response to the access request will be made and that the access request will not go unnoticed.

In another embodiment of the invention there is provided an access control system in which the server has means to detect whether a response to an access request has been sent and the server has means to transmit the access request to another computing device in the computer network on no response to the access request being sent after a predetermined period. By implementing such a system, an individual at the access point is virtually assured of a response to his access request as the access request will eventually be routed to a computing device having an operator present who may operate their computing device as the control unit and permit or deny access to the requesting party.

In a further embodiment of the invention there is provided an access control system in which the computer network further comprises a local area network (LAN). Typically, the access control system will be installed within a single building and its immediate environment and therefore the computer network used by the system can be a LAN installed in that building. This reduces the wiring and other hardware that must be installed for the access control system.

In one embodiment of the invention there is provided an access control system in which the computer network further comprises a wide area network (WAN). In certain circumstances this is seen as very beneficial. For example, this is of some use in organisations having a number of distributed premises so that access to any of that organisation's premises may be controlled from a remote location. Alternatively the access control system may be used to control access to a plurality of premises belonging to different organisations when operated by a security company.

In another embodiment of the invention there is provided an access control system in which the computing device is a PC. PCs are present on most employees' workstations in many organisation, therefore the use of a PC as a control unit within an access control system allows for great versatility and flexibility in the system, as any employee may potentially become the operator of the access control system. Furthermore, it is possible to use existing hardware without requiring additional hardware for the control unit to implement the access control system which significantly simplifies and reduces the cost of installation and implementation.

In a further embodiment of the invention there is provided an access control system in which the computing device is a PDA. Alternatively, the computing device is a mobile telephone. PDAs and mobile telephones are commonly available devices and have the added advantage of being portable thereby allowing an operator of the access control system to be away from their desk or even entirely remote from the premises while still allowing them to access the system and operate the control unit. The use of mobile communication devices such as PDAs and mobile telephones as control units greatly increases the convenience of the system for both the individual at the access unit and operator of the control unit as the individual is almost certainly guaranteed a response to an access request and the operator is not tied down to a particular location.

In another embodiment of the invention there is provided an access control system in which the access unit comprises one or more of a speaker unit, a video display, a camera, a video phone, a proximity sensor, a card reader, a microphone and a call button.

In a further embodiment of the invention there is provided an access control system in which the system comprises a plurality of access units, each of which is associated with an access point. This allows the access control system of the invention to be used to control a variety of access points within a single establishment or premises. The access points include doors, car park barriers, warehouse doors and the like. Only one operator is required to operate the access control system controlling all the access points. The access points do not necessarily have to be within the one location, they may be remote from each other at a plurality of premises all connected to the computer network.

In one embodiment of the invention there is provided an access control system in which the communications link comprises a TCP/IP connection. In this way, the access control system may interact with the Internet and other TCP/IP based networks allowing the various parts of the system to be distributed over a plurality of locations.

In another embodiment of the invention there is provided an access control system in which the communications link between the access unit and the server further comprises a wireless link. The use of wireless links greatly increases the ease of installation and use of the system. Furthermore, it assists in allowing the distribution of the system over a plurality of locations and facilitates the use of mobile communications devices as control units within the system.

In a further embodiment of the invention there is provided an access control system in which the communications link between the access unit and the server is routed over the Internet. In this way, the access unit may be located remote from the server, allowing the access control system to be used for controlling access points in a plurality of distributed locations within an organisation or even a plurality of organisations. Furthermore, the internet is a relatively cheap, efficient and reliable way to provide communications between remote locations.

In one embodiment of the invention there is provided an access control system in which the communications link between the access unit and the server is routed through a mobile communications network.

In another embodiment of the invention there is provided an access control system in which the communications link between the server and the control unit further comprises a wireless link. In one embodiment the wireless link comprises a radio link.

In a further embodiment of the invention there is provided an access control system in which the communications link between the server and the control unit is routed over the Internet. In this way the server may be located remote from the control unit, further allowing the access control system to be distributed over a number of locations. In such cases, any computing device having means to connect to the Internet, including a PC, a mobile telephone or a PDA or the like, can operate as a control unit within the system.

In one embodiment of the invention there is provided an access control system in which the communications link between the server and the control unit is routed through a mobile communications network. In this way, a mobile communications device such as a PDA or mobile telephone may be used as a control unit. It is understood that any device capable of connecting to the Internet, by whatever means, be it wired or wireless, is operable as a control unit within the access control system as long as that device has access to and is connectable to the computer network. A mobile communications device may connect to the Internet via WAP, GPRS, UMTS or any other suitable protocol.

In another embodiment of the invention there is provided an access control system in which the server and the computing device are housed in the same computer.

In a further embodiment of the invention there is provided an access control system in which the server has means to store a log of access requests. In this way, the log of access requests can be inspected to analyse information such as time of visitor arrivals, the number of successful access requests and the average response time from operators. This information can be used for safety and security purposes and also to improve the service offered by the operators of the access control system.

In one embodiment of the invention there is provided an access control system in which the server stores a pictorial image of an individual attempting to gain access taken by a camera on the access unit. In this way, there is a record of each individual that has attempted to gain access via the access control system stored for future reference. This information can be useful for safety and security purposes.

In another embodiment of the invention there is provided an access control system in which the server has a database of images, and in which the access request comprises a pictorial image taken of an individual requesting access at an access unit, and the server has means to compare that pictorial image with the images stored in the database and refuse or permit access based on the comparison. In this way, recognised individuals may be automatically granted access, this is particularly suited for use with employees of a company. This also facilitates the use of biometrics within the system for identification purposes.

In a further embodiment of the invention there is provided an access control system in which the server has a database of voice samples, and in which the access request comprises a voice sample taken from an individual requesting access at an access unit, and the server has means to compare that received voice sample with the voice samples stored in the database and refuse or permit access based on the comparison.

In one embodiment of the invention there is provided an access control system in which the server has a database of identifier data, and in which the access request comprises identifier data sent by an individual requesting access at an access unit, and the server has means to compare the identifier data with the identifier data stored in the database and refuse or permit access based on the comparison. In this case, identifier data may take the form of a Personal Identification Number (PIN) code to be entered on a keypad of the access unit. Alternatively, the identifier data may be stored on a record carrier such as a smart card and read by a suitable reader comprised in the access unit.

In another embodiment of the invention there is provided an access control system in which the access unit further comprises a receiver to receive a response to the access request and the server provides a pre-recorded message in response to the access request if certain predetermined criteria are met. In this way, out-of-hours messages may be played to individuals wishing to gain access to a premises outside of working hours. Similarly, in cases where the individual at the access unit is identified by the system, by PIN, card, voice, picture or alternative means, a personalised greeting or message may be played to that person on their activation of the access unit.

In a further embodiment of the invention there is provided an access control system in which the access unit receives its power supply over the communications link. This is a very convenient way of powering the access point and further provides for reducing the wiring required for the installation of the access control system. In one embodiment according to the present invention, the server further comprises a web server.

### Detailed Description of the Invention

The invention will now be more clearly understood from the following description of some embodiments thereof, given by way of example only, with reference to the accompanying drawings in which:-
Figure 1 is a diagrammatic representation of an access control system according to the invention; and
Figure 2 is a diagrammatic representation of another embodiment of access control system according to the invention.

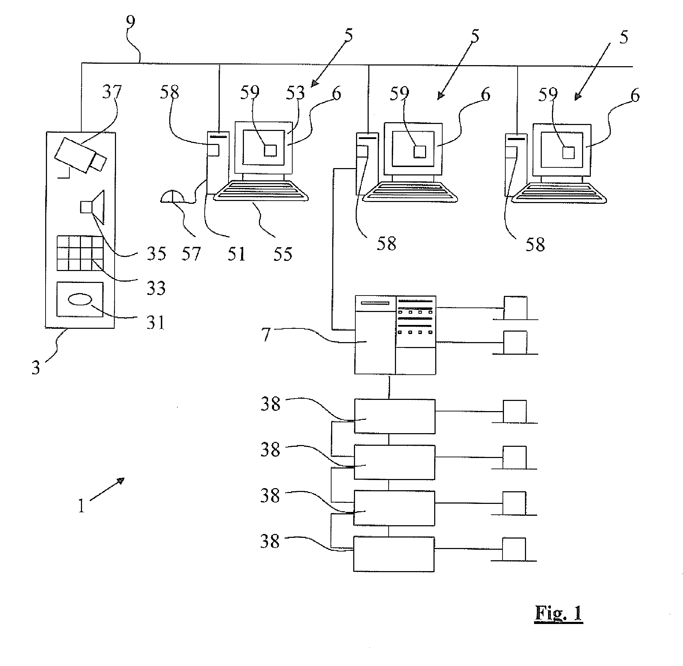

Referring to Figure 1, there is shown an access control system, indicated generally by the reference numeral 1, comprising an access unit 3 associated with an access point (not shown) and a plurality of control units 5. The control units 5 are implemented by computing devices 6, in this case PCs. The access control system 1 further comprises a server 7 and a computer network 9 connected between the access unit 3, the control unit PCs 6 and the server 7. The access unit 3 is connected to the control unit 5 via a communication link 11 which is routed through the computer network 9.

The access unit 3 further comprises a microphone 31, a keypad 33, a speaker 35 and a camera 37. The control unit 5 computing device further comprises a hard drive 51, a monitor 53, a keyboard 55, a mouse 57, a microphone (not shown) and a speaker 58. The access unit 3 is generally situated at an access point to a premises such as a door or a gate (not shown). Additional access units 38 are provided and are shown connected directly or indirectly to the server 7 from where the access request may be routed onwards to a computing device 6 acting as a control unit 5.

In use, an individual wishing to gain access at an access point approaches the access unit 3 and generates an access request by pressing one or more of the buttons on the key pad 33. Once the access request has been generated, the camera 37, the microphone 31 and the speaker 35 of the access unit 3 are activated and the video data captured by the camera 37 and sound data captured by the microphone 31 are transmitted over the computer network 9 to the server 7. Once the data is received by the server 7 it is thereafter routed to a control unit 5 in the access control system 1. On receipt of the access request at the control unit 5, a communication link is established between the access unit 3 and the control unit 5 and the video data received from the access unit 3 will be displayed in a pop-up window 59 on the PC monitor 53 while the sound data received will be transmitted through the speaker 58 of the PC 5. The individual (not shown) at the access unit 3 and the operator (not shown) at the PC 5 will then be able to engage in two-way voice communication.

The pop-up window 59 contains buttons (not shown) for controlling access at the access point and the operator may permit or deny access using the keyboard 55 or the mouse 57 of the computing device 6. If the operator of the access control system 1 decides to grant access to the individual (not shown), he simply clicks on an appropriate button and an open message will be transmitted back from the PC to the access unit 3 or more usually a locking mechanism on the door or gate at the access point, which will in turn open the door or gate (not shown) at the access point.

The access control system 1 may be configured such that the initial access request is transmitted to some or all of the control unit PCs 6 on the computer network 9 and that two-way communication will then be enabled between the individual at the access unit 3 and the control unit PC 6 of the first operator to respond to the access request.

Alternatively, the access control system 1 may be configured so that the access request is directed initially to just one control unit 5 and the server monitors the control unit 5 to determine if a response had been sent to the access unit 3. If no response has been sent within a first predetermined time, the server 7 redirects the access request to another control unit PC 6 connected to the computer network 9. If no response is received from that PC 6, the server will repeat the redirecting process for other PCs 6 in the access control system as appropriate until a response is sent to the access unit 3 or until a second predetermined period of time has passed. Similarly, the access control system 1 may be configured so that an operator who is aware of an unanswered access request at another operator's PC 6 may respond to the access request from his own PC, provided he is connected to the computer network 9 and is equipped with the relevant software required to allow his PC 6 to operate as a control unit 5 within the access control system 1.

The access control system 1 may also be programmed to switch between configurations at different times of the day, for example out of office hours or during lunchtime. Equally, the system may also be configured to playback pre-recorded messages at the access unit 3 on the generation of an access request by an individual at certain times of the day.

Furthermore, the playback of pre-recorded messages can be programmed to occur on the occasion of other conditions, such as the generation of an access request by an individual identified to be an employee or other person known to the system. The action of generating an access request may also be performed by entering a PIN code on the keypad 33, activating a proximity sensor (not shown) or other type of sensor (not shown) mounted in the access unit 3.

It is envisaged that the camera 37 is preferably a digital video camera transmitting at 15 frames per second. The camera 37 may be capable of transmitting CIF (352 x 288) or DIF (720 x 480) video signals. It is further envisaged that the access unit 3 is equipped with compression means capable of compressing digital video in line with the MPEG4 standard. In addition to this, it is envisaged that the server 7 may be a standard computer network server, a web server or alternatively could be provided by way of a dedicated piece of access control technology equipment having sufficient functionality such as those currently sold under the trade names ACT3000 or ACT2000 module, supplied by Access Control Technologies Limited, Ireland. The server or other access control technology equipment would be connected to the control unit PCs 6 and the access units by way of a TCP/IP connection forming the computer network 9. In the embodiment shown, the server 7 is in fact connected to the computer network through a PC 6. This is not necessary however and different configurations of network would be readily apparent to the person skilled in the art.

The computer network 9 is preferably a TCP/IP LAN with a connection to the Internet to allow the various elements of the access control system 1 to be remotely distributed from each other in different locations. Furthermore, the computer network is configured to supply power to the access unit 3 in line with the Power over the Ethernet (PoE) standard. The use of a TCP/IP network further facilitates the use of standard VolP telephones.

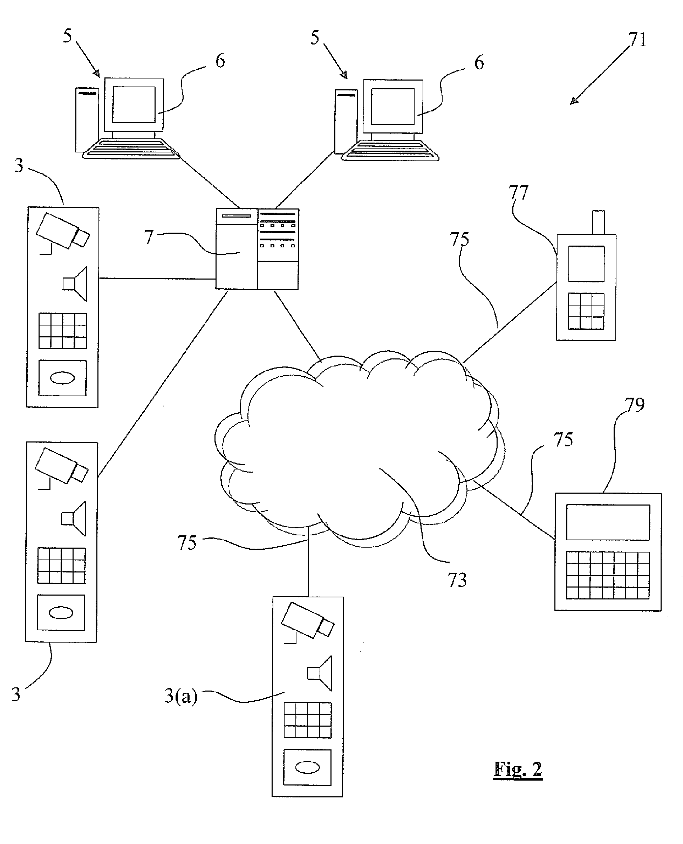

Referring to Figure 2 of the drawings there is shown an alternative embodiment of access control system according to the present invention, indicated generally by the reference numeral 71, where like parts have been given the same reference numeral as before. The access control system 71 comprises a plurality of access units 3 and a plurality of control units 5. One of the access units 3(a) if connected to the server via the internet 73. The access unit 3(a) accesses the internet over a wireless communication link 75. Two additional control units are provided by way of a mobile telephone 77 and a PDA 79 which in turn are connected to the server 7 via a wireless link 75 and through the internet 73. Instead of the internet, it is envisaged that the control devices 75, 77 and the access unit 3(a) could contact the server through a wireless communication network such as a mobile communication network.

It is envisaged that the response to the access request provided by way of an operator of the control unit may also be a pre-programmed response and need not necessarily be a response requiring operator input at the exact time the access request is made. For example, the response may be part of a pre-programmed facial image recognition program for employees whereby the operator of the control unit is essentially a system administrator and they store facial images of employees that are allowed access at a particular access point in server memory. The employee, in order to make an access request allows for an image of their face to be captured and that captured image is compared with the images stored in server memory. In this way, the operator may pre-authorise access to particular individuals and need not authorise access at the time of the request being made.

Finally, it is envisaged that the access control system is particularly suitable for use with video phones and similar equipment at the access point as significant savings can be made on both equipment and installation costs by replacing the typical control unit equipment with the existing hardware available in the premises such as the computing devices of a computing network that have the functionality of the control unit equipment already built in. This is of fundamental importance to the invention.

The access unit may comprise one or more of a speaker unit, a video display, a camera, a video phone, a proximity sensor, a keypad, a card reader, a microphone or a call button. A microphone and speaker unit facilitate two-way voice communication between the individual at the access unit and the operator at the control unit. The presence of a video-phone and camera allow for at least one-way video communication between the individual at the access unit and the operator at the control unit, while the addition of a video display at the access unit allows for two-way video communication between the parties. The proximity sensor, card reader, keypad and call button each allow for different methods of generating an access request at the access unit. A proximity sensor would generate an access request if an individual came within a certain range of the access unit. If a call button was fitted, the access control system would require that an individual activated the call button to generate an access request.

The use of a card reader or keypad would be more suited to access control systems where those wishing to gain access at the access point were regular users, such as company employees, who have been issued with identification cards or pin codes for use with the access control system. In such a case, the individual must activate the card reader with his card in order to generate an access request. Furthermore, the keypad may be used to initiate communication with a particular individual, company or location within the building. Additionally, the use of an identification card or pin code would allow the server to retrieve stored information relating to the user of that card or code and display it at the control unit for the benefit of the operator. The access unit may also include means to provide audio noise cancellation. In the embodiments shown, the keypad has a number of buttons however it will be understood that a single button could suffice.

In this specification the terms "comprise, comprises, comprised and comprising" and the terms "include, includes, included and including" are all deemed totally interchangeable and should be afforded the widest possible interpretation.

This invention is in no way limited to the embodiments hereinbefore described but maybe varied in construction and detail within the scope of the claims.

## Claims

1. An access control system (1) comprising an access unit (3) associated with an access point and a control unit (5) connectable to the access unit (3) by way of a communications link (11), the access unit (3) having means responsive to an individual to generate an access request and a transmitter to transmit the access request to the control unit (5), the control unit (5) comprising means to receive an access request from the access unit (3), means to receive a response to the access request from an operator of the control unit (5) and means to transmit an access signal to permit or deny access to the individual at the access point, **characterised in that**:
the access control system further comprises a separate computer network (9), the computer network comprising a server (7) and at least one computing device (6), the computing device being operable as the control unit (5) and the communications link (11) between the control unit and the access unit being routed through the separate computer network.

2. An access control system (1) as claimed in claim 1 in which the communication link (11) is routed through the separate computer network (9) between the control unit (5) and the access unit (3) via the server (7).

3. An access control system (1) as claimed in claim 1 or 2 in which the computing device (6) is provided with means to receive and display a pictorial image transmitted from the access unit (3) as part of the access request.

4. An access control system (1) as claimed in any preceding claim in which the computer network (9) comprises a plurality of computing devices (6), each of the computing devices being operable as the control unit (5).

5. An access control system (1) as claimed in claim 4 in which there are provided a plurality of communications links (11) between the access unit and the computing devices (6) and the access request is sent to each of the computing devices.

6. An access control system (1) as claimed in claim 4 in which the server (7) has means to detect whether a response to an access request has been sent and the server (7) has means to transmit the access request to another computing device (6) in the computer network on no response to the access request being sent after a predetermined period.

7. An access control system (1) as claimed in any preceding claim in which the computer network (9) further comprises a local area network (LAN).

8. An access control system (1) as claimed in any of claims 1 to 6 in which the computer network (9) further comprises a wide area network (WAN).

9. An access control system (1) as claimed in any preceding claim in which the computing device (6) is a PC.

10. An access control system (1) as claimed in any of claims 1 to 8 in which the computing device (6) is a PDA.

11. An access control system (1) as claimed in any of claims 1 to 8 in which the computing device (6) is a mobile telephone.

12. An access control system (1) as claimed in any preceding claim in which the access unit (3) comprises one or more of a speaker unit, a video display, a camera, a video phone, a proximity sensor, a card reader, a microphone or a call button.

13. An access control system (1) as claimed in any preceding claim in which the system comprises a plurality of access units (3), each of which is associated with an access point.

14. An access control system (1) as claimed in any preceding claim in which the communications link (11) comprises a TCP/IP connection.

15. An access control system (1) as claimed in any preceding claim in which the communications link between the access unit (3) and the server (7) further comprises a wireless link.

16. An access control system (1) as claimed in any preceding claim in which the communications link (11) between the access unit (3) and the server (7) is routed over the Internet.

17. An access control system (1) as claimed in any preceding claim in which the communications link (11) between the access unit (3) and the server (7) is routed through a mobile communications network.

18. An access control system (1) as claimed in any preceding claim in which the communications link (11) between the server (7) and the control unit (5) further comprises a wireless link.

19. An access control system (1) as claimed in any preceding claim in which the communications link (11) between the server (7) and the control unit (5) is routed over the Internet.

20. An access control system (1) as claimed in any preceding claim in which the communications link (11) between the server (7) and the control unit (5) is routed through a mobile communications network.

21. An access control system (1) as claimed in any preceding claim in which the server (7) and the computing device (6) are housed in the same computer.

22. An access control system (1) as claimed in any preceding claim in which the server (7) has means to store a log of access requests.

23. An access control system (1) as claimed in any preceding claim in which the server (7) stores a pictorial image of an individual attempting to gain access taken by a camera on the access unit (3).

24. An access control system (1) as claimed in any preceding claim in which the server (7) has a database of images, and in which the access request comprises a pictorial image taken of an individual requesting access at an access unit (3), and the server (7) has means to compare that pictorial image with the images stored in the database and refuse or permit access based on the comparison.

25. An access control system (1) as claimed in any preceding claim in which the server (7) has a database of voice samples, and in which the access request comprises a voice sample taken from an individual requesting access at an access unit, and the server (7) has means to compare that received voice sample with the voice samples stored in the database and refuse or permit access based on the comparison.

26. An access control system (1) as claimed in any preceding claim in which the server (7) has a database of identifier data, and in which the access request comprises identifier data sent by an individual requesting access at an access unit (3), and the server (7) has means to compare the identifier data with the identifier data stored in the database and refuse or permit access based on the comparison.

27. An access control system (1) as claimed in any preceding claim in which the access unit (3) further comprises a receiver to receive a response to the access request and the server (7) provides a pre-recorded message in response to the access request if certain predetermined criteria are met.

28. An access control system (1) as claimed in any preceding claim in which the access unit (3) receives its power supply over the communications link (11).
